# FASCICULE DE BREVET EUROPEEN

(11) **EP 4 655 491 B1**
(45) Date de publication et mention de la délivrance du brevet: **15.07.2026**
(21) Numéro de dépôt: 24701029.1
(22) Date de dépôt: 22.01.2024
(51) Int. Cl.: F01D 25/26, F01D 5/28, F02K 3/06, F01D 25/24, F01D 9/04

(54) **SECTEUR DE VIROLE INTÉRIEURE POUR TURBOMACHINE D'AÉRONEF**
INNERER MANTELSEKTOR FÜR EINE FLUGZEUGTURBOMASCHINE
INNER SHROUD SECTOR FOR AN AIRCRAFT TURBOMACHINE

(30) Priorité: 25.01.2023 FR 2200666
(43) Date de publication de la demande: 03.12.2025
(73) Titulaire: SAFRAN AIRCRAFT ENGINES, 75015 Paris (FR)
(72) Inventeur: NABIAS, Philippe Didier Edmond Andre Liberal, 77550 MOISSY-CRAMAYEL (FR); LACROIX, Florian Benjamin Kévin, 77550 MOISSY-CRAMAYEL (FR); VITRA, Julien, 77550 MOISSY-CRAMAYEL (FR); POUPARD, Arnaud, 77550 MOISSY-CRAMAYEL (FR); MATHON, Richard, 77550 MOISSY-CRAMAYEL (FR)
(74) Mandataire: Argyma
(86) Numéro de dépôt international: PCT/EP2024/051389
(87) Numéro de publication internationale: WO 2024/156646

(56) Documents cités:
- EP-B1- 0 952 920
- FR-A1- 3 121 709
- US-A1- 2011 254 267
- US-A1- 2021 340 881
- US-B2- 11 002 145

## Description

### Domaine technique

La présente invention concerne le domaine des carters de turbomachine d'aéronef et vise plus précisément un secteur de virole intérieure.

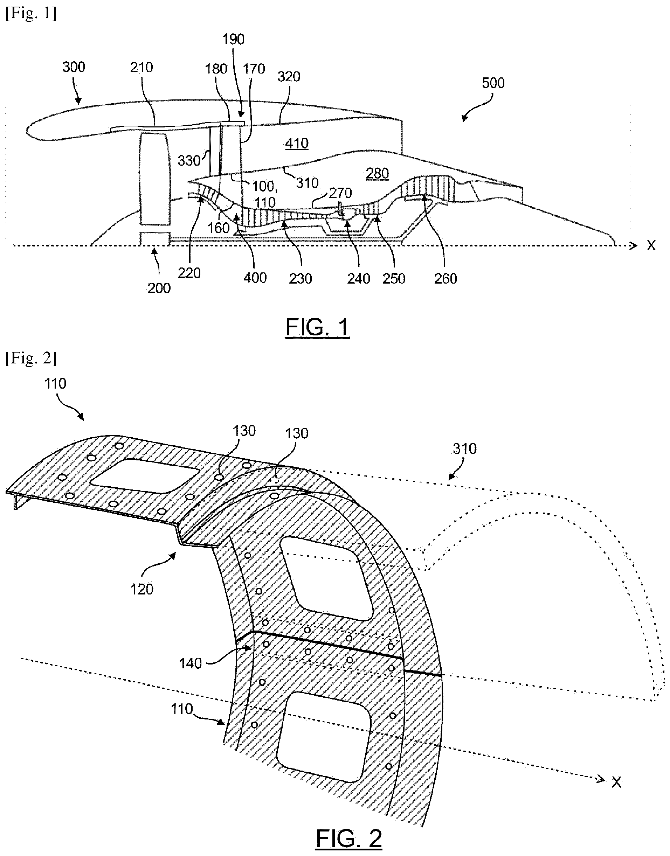

De manière connue, en référence à la [Fig.1], une turbomachine d'aéronef 500, d'axe longitudinal X, comprend d'amont en aval une soufflante 200, un compresseur basse pression 220, un compresseur haute pression 230, une chambre de combustion 240, une turbine haute pression 250 et une turbine basse pression 260. Les compresseurs 220, 230, la chambre de combustion 240 et les turbines 250, 260 définissent ensemble une veine primaire 400 de circulation d'un flux d'air, délimitée extérieurement par un carter central 270. La turbomachine d'aéronef 500 comprend également une veine secondaire 410 de circulation d'un flux d'air qui s'étend extérieurement autour de la veine primaire 400 et est entourée par une nacelle 300.

De manière connue et comme illustré sur la [Fig.1], la turbomachine d'aéronef 500 comprend un carter intermédiaire 190 comprenant une virole intérieure 100 et une virole extérieure 180 qui délimitent respectivement intérieurement et extérieurement la veine secondaire 410. La virole intérieure 100 est fixée à l'amont à un moyeu 160 du carter intermédiaire 190. La virole intérieure 100 et la virole extérieure 180 sont reliées par des bras 170 s'étendant radialement dans la veine secondaire 410, en aval d'une rangée d'aubes fixes 330 (« outlet guide vanes (OGV) » en anglais). La virole extérieure 180 s'étend dans le prolongement aval du carter de soufflante 210 et dans le prolongement amont d'un carter extérieur de nacelle 320 (« outer fan duct » en anglais).

De manière connue et comme illustré sur les figures 1 et 2, la virole intérieure 100 s'étend dans le prolongement amont d'un carter intérieur de nacelle 310 (« inner fan duct » en anglais), qui délimite avec le carter central 270 un compartiment inter-veines 280 (« compartment core » en anglais) s'étendant radialement entre la veine primaire 400 et la veine secondaire 410. Plus précisément, en référence à la [Fig.2], la virole intérieure 100 comprend une extrémité aval 120 en forme de marche configurée pour être chevauchée par une extrémité amont du carter intérieur de nacelle 310 et fixée à celle-ci par des vis de fixation insérées radialement dans des logements 130. Un tel assemblage est connu sous le terme de soyage.

En pratique, la virole intérieure 100 est formée par plusieurs secteurs de virole intérieure 110 angulaires, reliés ensemble par des plaques de jonction 140 grâce à des vis de fixation insérées radialement dans des logements 130. Les secteurs de virole intérieure 110 se présentent typiquement sous la forme de pièces monoblocs en titane. Le titane présente avantageusement une résistance mécanique et une résistance thermique à la déformation élevées, mais également une masse volumique importante qui conduit à des secteurs de virole intérieure 110 de masse élevée. Ceci a pour effet d'alourdir la turbomachine d'aéronef 500 et donc d'augmenter sa consommation énergétique en vol.

Pour réduire la masse d'un secteur de virole intérieure, il est connu des secteurs de virole intérieure d'épaisseur de titane variable, dont l'épaisseur est réduite au niveau des zones peu soumises aux contraintes et plus importante au niveau des zones les plus soumises aux contraintes, par exemple au niveau des logements de fixation. Un tel gain de masse s'avère toutefois insuffisant.

Il est connu par la demande de brevet US2021340881A1 un carter de soufflante délimitant extérieurement la veine d'air qui est formé en matériau composite avec un élément de raidissement en nid d'abeille.

L'invention vise ainsi à réduire la masse d'un secteur de virole intérieure pour une turbomachine d'aéronef tout en conservant une résistance mécanique et thermique à la déformation satisfaisante.

### PRESENTATION DE L'INVENTION

L'invention concerne un secteur de virole intérieure configuré pour être monté dans une turbomachine d'aéronef, la virole intérieure étant une pièce de révolution définie par rapport à un axe longitudinal orienté d'amont en aval configurée pour délimiter intérieurement une veine secondaire de la turbomachine d'aéronef, le secteur de virole intérieure comprenant une extrémité aval comprenant :
- une portion longitudinale amont située à une première distance radiale de l'axe longitudinal et configurée pour s'étendre dans le prolongement amont d'un carter intérieur de nacelle,
- une portion longitudinale aval située à une deuxième distance radiale de l'axe longitudinal inférieure à la première distance radiale et configurée pour s'étendre intérieurement au carter intérieur de nacelle, et
- une portion médiane reliant la portion longitudinale amont et la portion longitudinale aval.

L'invention est remarquable en ce que le secteur de virole intérieure comprend au moins une couche intérieure de matériau composite et au moins une couche extérieure de matériau composite, le matériau composite se présentant sous la forme d'une pluralité de fibres de renfort dans une matrice, la portion médiane de l'extrémité aval comprenant au moins un volume de matériau intumescent pris en sandwich entre la couche intérieure de matériau composite et la couche extérieure de matériau composite de manière à former une surépaisseur locale selon la direction longitudinale.

L'utilisation de matériau composite permet avantageusement de conférer au secteur de virole intérieure une masse réduite. Le matériau intumescent permet quant à lui de réduire le niveau de porosité du matériau composite au niveau de la portion médiane, ce qui permet d'obtenir un secteur de virole intérieure de très bonne tenue mécanique. En effet, les couches de matériau composite, initialement malléables, nécessitent d'être durcies ensemble par compression radiale à une température de chauffage. Or la compression radiale ne permet pas de compresser efficacement la portion médiane, en particulier lorsqu'elle s'étend radialement sur une distance supérieure à deux épaisseurs de portion longitudinale. Le volume de matériau intumescent permet ainsi, grâce à ses propriétés d'expansion sous l'effet de la chaleur, de compresser de manière supplémentaire le matériau composite au niveau de la portion médiane pour réduire localement la porosité. Le matériau intumescent permet en outre de former une surépaisseur de manière à la fois plus simple et rapide qu'à partir de strates de matériau composite prédécoupées. Un tel agencement avec un film intumescent permet des variations locales d'épaisseur au niveau de l'extrémité aval du secteur en composite, ce qui permet d'obtenir un profil interne de décrochement différent du profil externe de décrochement ; typiquement, un profil externe anguleux (abrupt) et un profil interne régulier et progressif bien adapté à une étanchéification par joint.

Selon un aspect préféré de l'invention, le secteur de virole intérieure comprend une pluralité de couches de matériau composite, chacune s'étendant de manière uniforme dans toute l'extrémité aval. L'utilisation de matériau intumescent permet d'éviter de devoir découper et superposer localement des couches de matériau composite pour définir la surépaisseur, ce qui est fastidieux.

Selon un aspect de l'invention, le volume de matériau intumescent de la portion médiane présente une épaisseur longitudinale selon une direction parallèle à l'axe longitudinal qui est décroissante radialement de l'extérieur vers l'intérieur, de préférence d'une valeur maximale à une valeur minimale au moins deux fois inférieure. Préférentiellement, la valeur maximale de l'épaisseur longitudinale est au moins quatre fois supérieure à la valeur minimale. Préférentiellement, la valeur maximale de l'épaisseur longitudinale est au plus dix fois supérieure à la valeur minimale. Le matériau intumescent est avantageusement situé dans la portion médiane de sorte à augmenter la composante longitudinale de la portion médiane et à réduire sa composante radiale. La portion médiane forme ainsi une pente radiale plus douce ce qui permet une meilleure compression du matériau composite.

Selon un aspect de l'invention, la portion médiane comporte une paroi extérieure transversale par rapport à l'axe longitudinal. Ceci assure une butée et la coopération avec l'extrémité amont du carter intérieur de nacelle.

Selon un aspect de l'invention, la portion médiane comporte au moins une première tranche angulaire et une deuxième tranche angulaire juxtaposées, le volume de matériau intumescent s'étendant uniquement dans la première tranche angulaire. Ceci forme une bande longitudinale de fixation, de préférence en bordure angulaire du secteur de virole intérieure pour assurer sa fixation à un secteur de virole intérieure voisin.

Selon un aspect de l'invention, la portion médiane comporte une surface intérieure formant au niveau de la première tranche angulaire une protubérance longitudinale par rapport à la deuxième tranche angulaire. Une telle protubérance longitudinale permet d'augmenter la composante longitudinale de la portion médiane et de réduire sa composante radiale. La portion médiane présente ainsi une pente radiale plus douce ce qui permet une meilleure compression du matériau composite. Aucune protubérance n'est avantageusement formée du côté de la surface extérieure afin de permettre la coopération avec le carter intérieur de nacelle.

Selon un aspect de l'invention, le volume de matériau intumescent s'étend radialement dans toute la portion médiane, de manière à relier la portion longitudinale amont et la portion longitudinale aval et former une pente radiale douce assurant une bonne compression radiale.

Selon un aspect de l'invention, la portion médiane comprend au moins un film de séparation séparant le volume de matériau intumescent de la couche intérieure de matériau composite et de la couche extérieure de matériau composite. De préférence, le film de séparation est étanche. Ceci permet d'éviter le déport de matière lors de la compression et du chauffage, et ainsi améliorer la tenue mécanique de la pièce finale.

Selon un aspect de l'invention, la portion médiane s'étend radialement sur une distance au moins deux fois supérieure à une épaisseur radiale de la portion longitudinale amont, de préférence au moins quatre fois supérieure. Selon un aspect préféré, la portion médiane s'étend radialement sur une distance supérieure à une épaisseur radiale de la portion longitudinale aval, de préférence au moins trois fois supérieure. Une telle portion médiane rend d'autant plus nécessaire l'utilisation de matériau intumescent pour renforcer la compression.

Selon un aspect de l'invention, la couche intérieure de matériau composite et la couche extérieure de matériau composite comportent, au niveau de la portion médiane, une porosité inférieure à 2%, de préférence inférieure à 1% et préférentiellement inférieure à 0,7%. Un tel niveau de porosité assure une bonne tenue mécanique.

Selon un aspect de l'invention, le volume de matériau intumescent de la portion médiane est désigné premier volume de matériau intumescent, la portion longitudinale aval comprenant au moins un deuxième volume de matériau intumescent pris en sandwich entre la couche intérieure de matériau composite et la couche extérieure de matériau composite de manière à former une surépaisseur locale selon la direction radiale, le deuxième volume de matériau intumescent s'étendant dans le prolongement longitudinal du premier volume de matériau intumescent. Les premier et deuxième volumes de matériau intumescent forment ensemble une bande de fixation longitudinale de grande résistance mécanique.

Selon un aspect préféré, la portion longitudinale amont comprend au moins un troisième volume de matériau intumescent pris en sandwich entre la couche intérieure de matériau composite et la couche extérieure de matériau composite de manière à former une surépaisseur locale selon la direction radiale, le troisième volume de matériau intumescent s'étendant dans le prolongement longitudinal du premier volume de matériau intumescent. Les premier et troisième volumes de matériau intumescent forment ensemble une bande de fixation longitudinale de grande résistance mécanique.

L'invention concerne un secteur de virole intérieure tel que décrit précédemment avant compression et chauffage, dans lequel le matériau intumescent est adapté pour s'expandre sous l'effet de la chaleur, de préférence à une température prédéterminée supérieure à 115°C, la température prédéterminée étant préférentiellement inférieure à 180°C. Avant compression et chauffage, le matériau composite et le matériau intumescent se présentent à l'état malléable.

L'invention concerne également un secteur de virole intérieure tel que décrit précédemment après compression et chauffage, dans lequel le matériau intumescent est à l'état expansé. Après compression et chauffage, le matériau composite et le matériau intumescent se présentent à l'état durci.

L'invention concerne également une virole intérieure pour turbomachine d'aéronef comprenant une pluralité de secteurs de virole intérieure tels que décrit précédemment, la virole intérieure étant une pièce de révolution définie par rapport à un axe longitudinal orienté d'amont en aval configurée pour délimiter intérieurement une veine secondaire de la turbomachine d'aéronef.

L'invention concerne également un carter intermédiaire pour turbomachine d'aéronef comprenant une virole intérieure telle que décrite précédemment, le carter intermédiaire comprenant un moyeu, sur lequel est fixé la virole intérieure, et une virole extérieure, qui s'étend en vis-à-vis de la virole intérieure et est configurée pour délimiter extérieurement une veine secondaire de la turbomachine d'aéronef. Le carter intermédiaire comprend de préférence au moins un bras reliant la virole intérieure et la virole extérieure.

L'invention concerne également une turbomachine d'aéronef comprenant une veine primaire et une veine secondaire s'étant extérieurement autour de la veine primaire, la turbomachine d'aéronef comprenant un carter intermédiaire tel que décrit précédemment dans lequel la virole intérieure et la virole extérieure délimitent respectivement intérieurement et extérieurement la veine secondaire. De préférence, la virole extérieure s'étend dans le prolongement aval d'un carter de soufflante.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique en demi-coupe longitudinale d'une turbomachine d'aéronef selon l'art antérieur.
La [Fig.2] est une représentation schématique en perspective depuis l'aval d'un secteur de virole intérieure selon l'art antérieur.
La [Fig.3] est une représentation schématique en demi-coupe longitudinale d'une turbomachine d'aéronef comprenant des secteurs de virole intérieure selon une forme de réalisation de l'invention.
La [Fig.4] est une représentation schématique en perspective depuis l'aval d'un secteur de virole intérieure selon une forme de réalisation de l'invention.
La [Fig.5] est une représentation schématique en perspective depuis l'aval de l'extrémité aval du secteur de virole intérieure de la [Fig.4].
La [Fig.6] est une représentation schématique en coupe radiale de la première tranche angulaire de l'extrémité aval de la [Fig.5].
La [Fig.7] est une représentation schématique en perspective depuis l'amont de l'extrémité aval de la [Fig.5].
La [Fig.8] est une représentation schématique en coupe radiale de la première tranche angulaire de l'extrémité aval selon une autre forme de réalisation comprenant un film de séparation.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

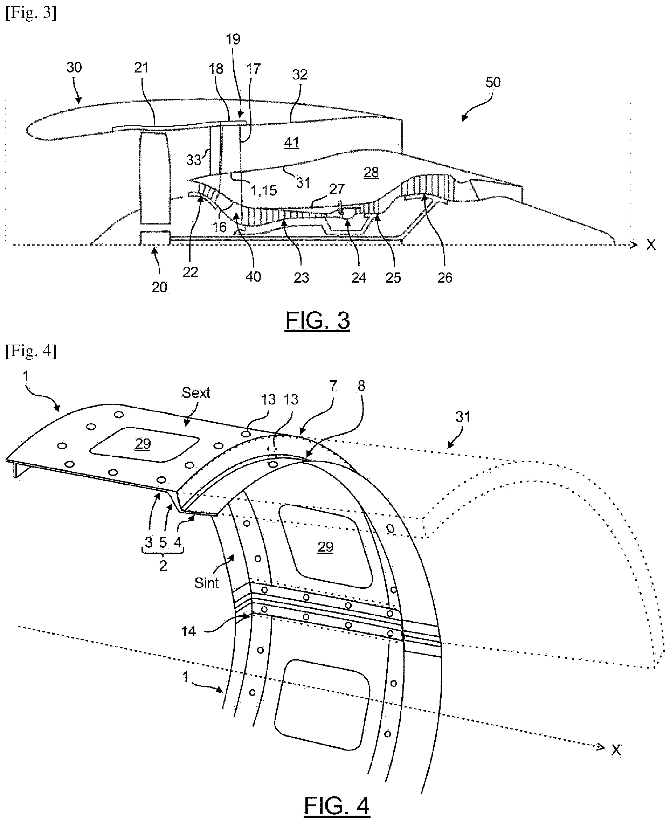

En référence à la [Fig.3] et comme décrit dans le préambule, une turbomachine d'aéronef 50 s'étend classiquement selon un axe longitudinal X orienté d'amont en aval. Par la suite, les termes « amont » et « aval » sont définis par rapport à l'orientation de l'axe longitudinal X. Les termes « intérieur » et « extérieur » sont quant à eux définis par rapport à un axe radial s'étendant orthogonalement à l'axe longitudinal X.

Toujours en référence à la [Fig.3], la turbomachine d'aéronef 50 comprend classiquement d'amont en aval une soufflante 20, un compresseur basse pression 22, un compresseur haute pression 23, une chambre de combustion 24, une turbine haute pression 25 et une turbine basse pression 26. Les compresseurs 22, 23, la chambre de combustion 24 et les turbines 25, 26 définissent ensemble une veine primaire 40 de circulation d'un flux d'air, délimitée extérieurement par un carter central 27. La turbomachine d'aéronef 50 comprend également une veine secondaire 41 de circulation d'un flux d'air qui s'étend extérieurement autour de la veine primaire 40 et est entourée par une nacelle 30.

En référence à la [Fig.3], la turbomachine d'aéronef 50 comprend un carter intermédiaire 19 comprenant une virole intérieure 15 et une virole extérieure 18 qui délimitent respectivement intérieurement et extérieurement la veine secondaire 41. La virole intérieure 15 est fixée à l'amont à un moyeu 16 du carter intermédiaire 19. La virole intérieure 15 et la virole extérieure 18 sont reliées dans cet exemple par des bras 17 s'étendant radialement dans la veine secondaire 41, en aval d'une rangée d'aubes fixes 33 (« outlet guide vanes (OGV) » en anglais). La virole extérieure 18 s'étend dans le prolongement aval du carter de soufflante 21 et dans le prolongement amont d'un carter extérieur de nacelle 32 (« outer fan duct » en anglais). La virole intérieure 15 s'étend dans le prolongement amont d'un carter intérieur de nacelle 31 (« inner fan duct » en anglais), qui délimite avec le carter central 27 un compartiment inter-veines 28 (« compartment core » en anglais) s'étendant radialement entre la veine primaire 40 et la veine secondaire 41.

Comme illustré sur les figures 3 et 4, la virole intérieure 15 est une pièce de révolution définie par rapport à l'axe longitudinal X dans la turbomachine d'aéronef 50, l'axe longitudinal X désignant par la suite indifféremment l'axe de la turbomachine 50 et l'axe de la virole intérieure 15 qui sont confondus. La virole intérieure 15 est formée par un ensemble de secteurs de virole intérieure 1 reliés entre eux et répartis angulairement autour de l'axe longitudinal X. Les secteurs de virole intérieure 1 s'étendent de préférence selon une largeur angulaire variable.

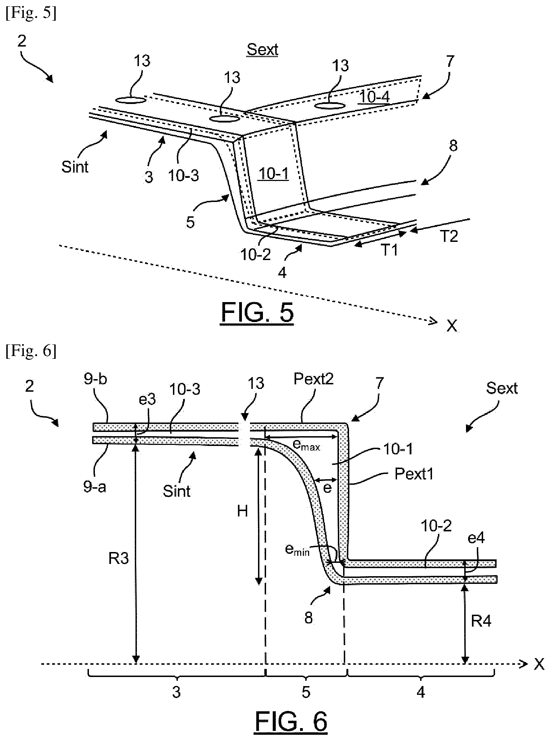

Selon l'invention et comme illustré sur la [Fig.4], chaque secteur de virole intérieure 1 comprend une extrémité aval 2 comprenant une portion longitudinale amont 3 et une portion longitudinale aval 4 reliées par une portion médiane 5. La portion longitudinale amont 3 et la portion longitudinale 4 sont situées respectivement à une première distance radiale R3 et à une deuxième distance radiale R4 de l'axe longitudinal X vérifiant : R4 > R3 ([Fig.6]). La portion longitudinale amont 3 s'étend dans le prolongement amont du carter intérieur de nacelle 31. La portion longitudinale aval 4 s'étend intérieurement au carter intérieur de nacelle 31. De manière préférée, la portion médiane 5 s'étend radialement sur une distance H comprise entre 24mm et 32mm.

Selon l'invention et comme illustré sur les figures 4 et 6, le secteur de virole intérieure 1 comprend au moins une couche intérieure de matériau composite 9a et au moins une couche extérieure de matériau composite 9b, le matériau composite se présentant sous la forme d'une pluralité de fibres de renfort dans une matrice, la portion médiane 5 de l'extrémité aval 2 comprenant au moins un volume de matériau intumescent 10-1 pris en sandwich entre la couche intérieure de matériau composite 9a et la couche extérieure de matériau composite 9b de manière à former une surépaisseur locale selon la direction longitudinale. De manière préférée, chaque couche de matériau composite 9a, 9b possède une épaisseur constante.

Le matériau composite présente avantageusement une masse volumique réduite par rapport au titane traditionnellement employé, ce qui permet d'obtenir un secteur de virole intérieure 1 de masse réduite. Le choix du matériau composite, préféré habituellement pour des pièces d'aéronef d'épaisseur uniforme et moins exposées aux contraintes mécaniques et aux déformations thermiques, est inédit dans un secteur de virole intérieure 1.

Le matériau intumescent permet quant à lui d'améliorer la tenue matière du secteur de virole intérieure 1, à savoir d'assurer un faible niveau de porosité dans le matériau composite. Comme ce sera vu par la suite, le secteur de virole intérieure 1 est formé par chauffage et compression d'un ensemble de couches de matériau composite, un ou plusieurs volumes de matériau intumescent ayant été intercalés. La compression se fait entre deux moules selon l'axe d'empilement des couches de matériau composite, soit radialement, ce qui ne permet pas d'assurer une compression suffisante au niveau de la portion médiane 5. Grâce à ses propriétés d'expansion lors du chauffage, le matériau intumescent participe à compresser le matériau composite au niveau de la portion médiane 5, pour obtenir le niveau de porosité souhaité.

Le volume de matériau intumescent comprend en outre avantageusement une taille et une forme quelconques, permettant d'obtenir aisément la surépaisseur souhaitée. Ceci évite de devoir former la surépaisseur par des strates de couches de matériau composite découpées chacune de manière précise, de telles strates étant en outre susceptibles de se déplacer pendant le chauffage et la compression.

Selon un aspect préféré illustré sur les figures 5 à 7, le secteur de virole intérieure 1 comprend plusieurs volumes de matériaux intumescents 10-1, 10-2, 10-3, 10-4. Dans cet exemple, le secteur de virole intérieure 1 comprend :
- le volume de matériau intumescent 10-1 situé dans la portion médiane 5 et désigné ci-après « premier volume de matériau intumescent 10-1 »,
- un deuxième volume de matériau intumescent 10-2 situé dans la portion longitudinale aval 4 dans le prolongement aval du premier volume de matériau intumescent 10-1, et
- un troisième volume de matériau intumescent 10-3 situé dans la portion longitudinale amont 3 dans le prolongement amont du premier volume de matériau intumescent 10-1.

Le premier volume de matériau intumescent 10-1 est continu avec le deuxième volume de matériau intumescent 10-2 et le troisième volume de matériau intumescent 10-3 de manière à former ensemble une bande longitudinale en surépaisseur s'étendant dans une première tranche angulaire T1 du secteur de virole intérieure 1, de préférence située au niveau d'un bord angulaire du secteur de virole intérieure 1. Une telle bande longitudinale en surépaisseur permet la fixation du secteur de virole intérieure 1 à un secteur de virole intérieure 1 voisin ou à un bras 17, de préférence via une plaque de jonction 14 ([Fig.4]). La bande longitudinale en surépaisseur comprend pour cela un ou plusieurs logements de fixation 13 dans lesquels sont insérés radialement des éléments de fixation, tels que des vis, des clous ou des rivets. Le secteur de virole intérieure 1 comprend de préférence une telle bande longitudinale en surépaisseur au niveau de ses deux bords angulaires.

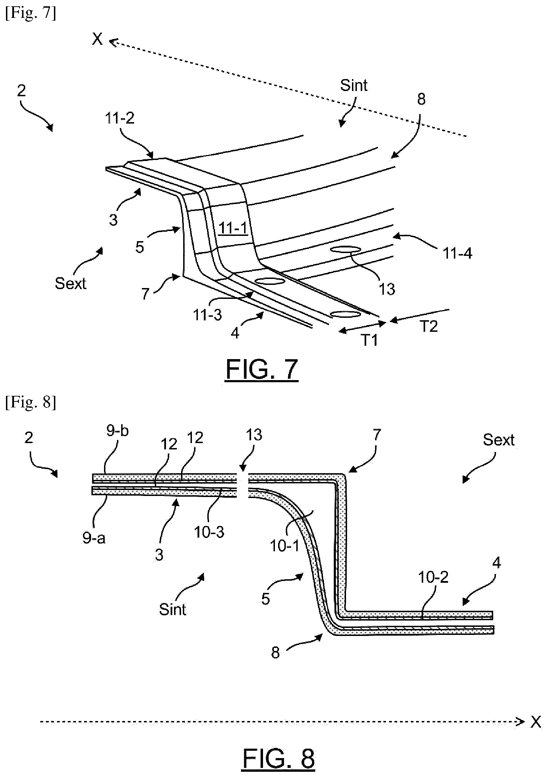

Également selon un aspect préféré illustré sur la [Fig.4], le secteur de virole intérieure 1 comprend une ou plusieurs ouvertures 29 reliées à un conduit de décharge d'un flux d'air prélevé en amont du compresseur basse pression 22, pour éviter l'apparition d'un phénomène de pompage à faible débit. Comme illustré sur les figures 5 et 7, le secteur de virole intérieure 1 comprend de préférence un quatrième volume de matériau intumescent 10-4 formant une bande transversale en surépaisseur situé en amont et en aval des ouvertures 29 pour permettre la fixation des conduits de décharge.

En référence à la [Fig.6], le secteur de virole intérieure 1 comprend un ensemble de couches de matériau composite 9a, 9b empilées radialement, qui s'étendent de préférence sur toute la surface de l'extrémité aval 2 et préférentiellement du secteur de virole intérieure 1. Dans cet exemple, seules deux couches 9a, 9b sont représentées, mais le nombre de couches est en pratique supérieur à huit. Chaque couche de matériau composite 9a, 9b comporte de préférence une épaisseur uniforme sur toute sa surface. Les couches 9a, 9b comportent de préférence une épaisseur identique entre elles. Le matériau composite se présente sous la forme d'un ensemble de fibres de renfort, de préférence en carbone, emprisonnées dans une matrice, de préférence un polyépoxyde, connu sous le terme d'« époxy ». Les couches de matériau composite 9a, 9b sont superposées et présentent une structure malléable configurée pour durcir et pour se solidariser ensemble après chauffage et mise sous pression afin d'obtenir la forme finale du secteur de virole intérieure 1.

Toujours en référence à la [Fig.6], le premier volume de matériau intumescent 10-1 est intercalé entre une couche intérieure 9a et une couche extérieure 9b de matériau composite. De préférence, le premier volume de matériau intumescent 10-1 est central, c'est-à-dire que le secteur de virole intérieure 1 comprend sensiblement autant de couches de part et d'autre du premier volume de matériau intumescent 10-1. De préférence également, tous les volumes de matériau intumescent 10-1, 10-2, 10-3, 10-4 sont intercalés entre la couche intérieure 9a et la couche extérieure 9b. Le volume intumescent est initialement malléable et configuré pour s'expandre sous l'effet de la chaleur, de préférence à une température prédéterminée supérieure à 115°C, la température prédéterminée étant préférentiellement inférieure à 180°C. Une fois chauffé, le matériau intumescent reste dans un état expansé durci. Le matériau intumescent comporte de préférence du polyépoxyde, et se présente par exemple sous la forme d'une mousse adhésive époxydique sans charge métallique tel que FM410-1 ou d'un film adhésif époxydique tel que AF3074 FST.

Selon un aspect préféré illustré sur la [Fig.8], le secteur de virole intérieure 1 comprend en outre un film de séparation 12, de préférence étanche, s'étendant de part et d'autre du volume de matériau intumescent 10-1 pour le séparer des couches de matériau composite 9a, 9b. Le film de séparation 12 évite, lors de la cuisson et de la compression, que le matériau intumescent et le matériau composite ne se mélangent au niveau de l'interface. Le film de séparation 12 comprend de préférence un matériau composite, préférentiellement disposé selon une ou deux couches. Ceci permet d'assurer une meilleure compression du matériau composite et participe à réduire le niveau de porosité du matériau composite.

De préférence, le secteur de virole intérieure 1 est constitué uniquement de matériau composite, de matériau intumescent et de préférence de film de séparation 12. De préférence également, le secteur de virole intérieure 1 comporte une structure monobloc, pour une meilleure tenue mécanique. Toujours de préférence, le niveau de porosité du matériau composite dans le secteur de virole intérieure 1 après cuisson et compression est inférieur à 2%, de préférence inférieur à 1% et préférentiellement inférieur à 0,7%.

Comme illustré sur les figures 5 à 7 et décrit précédemment, l'extrémité aval 2 comprend une portion longitudinale amont 3 et une portion longitudinale aval 4 reliées par une portion médiane 5, formant ensemble un décrochement. La portion médiane 5 comprend deux courbures successives, à savoir un premier pli 7 et un deuxième pli 8 radialement intérieur au premier pli 7. En pratique, l'extrémité aval 2 forme une marche configurée pour être chevauchée par une extrémité amont du carter intérieur de nacelle 31 et fixée à celle-ci par soyage grâce à des éléments de fixation de type vis, clous ou rivets insérés radialement dans des logements 13 ([Fig.4]).

En référence à la [Fig.6], la portion longitudinale amont 3 présente une épaisseur radiale e3 qui est de préférence constante sur toute sa longueur. De même, la portion longitudinale aval 4 présente une épaisseur radiale e4 de préférence constante sur toute sa longueur, et préférentiellement égale à l'épaisseur e3 de la portion longitudinale amont 3. La portion médiane 5 s'étend radialement sur une distance H vérifiant H = R4 - R3, qui est de préférence au moins deux fois supérieure à l'épaisseur e3 de la portion longitudinale amont 3, préférentiellement au moins quatre fois supérieure, et encore préférentiellement au plus dix fois supérieure.

En référence aux figures 5 et 6, la portion médiane 5 comprend une paroi extérieure transversale Pext1, définie entre le premier pli 7 et le deuxième pli 8, et une paroi extérieure longitudinale Pext2 définie en amont du premier pli 7 et s'étendant dans le prolongement de la portion longitudinale amont 3. Le premier pli 7 est de préférence angulaire au niveau de la surface extérieure Sext, dans cet exemple formant un angle droit. De même, le deuxième pli 8 est de préférence angulaire au niveau de la surface extérieure Sext, dans cet exemple formant un angle droit. La paroi extérieure transversale Pext1 s'étend dans un plan transversal à l'axe longitudinal X de manière à former une butée pour le carter intérieur de nacelle 31.

En référence aux figures 5 à 7, le volume de matériau intumescent 10-1 présente une épaisseur longitudinale e selon une direction parallèle à l'axe longitudinal X qui est décroissante radialement de l'extérieur vers l'intérieur L'épaisseur longitudinale e comprend une valeur maximale eₘₐₓ, définie à la première distance radiale R3 et une valeur minimale eₘᵢₙ, définie à la deuxième distance radiale R4, la valeur minimale eₘᵢₙ étant au moins deux fois inférieure à la valeur maximale eₘₐₓ, de préférence au moins autre fois supérieure et au plus dix fois supérieure.

En référence aux figures 6 et 7, le premier volume de matériau intumescent 10-1 s'étend uniquement dans une première tranche angulaire T1 du secteur de virole intérieure 1, dont la surface intérieure Sint forme une protubérance longitudinale 11-1 par rapport à une deuxième tranche angulaire T2 voisine. Autrement dit, le premier volume de matériau intumescent 10-1 forme une surépaisseur uniquement visible depuis la surface intérieure Sint. La surface extérieure Sext est avantageusement dénuée de protubérance au niveau de la première tranche angulaire T1. Selon un aspect préféré, le premier pli 7 et le deuxième pli 8 sont de préférence incurvés, progressifs, au niveau de la surface intérieure Sint. Selon un aspect préféré illustré sur la [Fig.7], les deuxième, troisième et quatrième volumes de matériau intumescent 10-2, 10-3, 10-4 forment une protubérance 11-2, 11-3, 11-4 radiale sur la surface intérieure Sint uniquement.

## Revendications

1. Secteur de virole intérieure (1) configuré pour être monté dans une turbomachine d'aéronef (50), la virole intérieure étant une pièce de révolution définie par rapport à un axe longitudinal (X) orienté d'amont en aval configurée pour délimiter intérieurement une veine secondaire (41) de la turbomachine d'aéronef (50), le secteur de virole intérieure (1) comprenant une extrémité aval (2) comprenant :
• une portion longitudinale amont (3) située à une première distance radiale (R3) de l'axe longitudinal (X) et configurée pour s'étendre dans le prolongement amont d'un carter intérieur de nacelle (31),
• une portion longitudinale aval (4) située à une deuxième distance radiale (R4) de l'axe longitudinal (X) inférieure à la première distance radiale (R3) et configurée pour s'étendre intérieurement au carter intérieur de nacelle (31), et
• une portion médiane (5) reliant la portion longitudinale amont (3) et la portion longitudinale aval (4),
• le secteur de virole intérieure (1) étant **caractérisé en ce qu'il** comprend au moins une couche intérieure de matériau composite (9a) et au moins une couche extérieure de matériau composite (9b), le matériau composite se présentant sous la forme d'une pluralité de fibres de renfort dans une matrice, la portion médiane (5) de l'extrémité aval (2) comprenant au moins un volume de matériau intumescent (10-1) pris en sandwich entre la couche intérieure de matériau composite (9a) et la couche extérieure de matériau composite (9b) de manière à former une surépaisseur locale selon la direction longitudinale, les couches de matériau composite (9a, 9b) et le volume de matériau intumescent (10-1) étant malléables et adaptés pour durcir lors d'une étape de chauffage et compression, le volume de matériau intumescent (10-1) étant adapté pour s'expandre lors de l'étape de chauffage et compression.

2. Secteur de virole intérieure (1) selon la revendication 1, dans lequel le volume de matériau intumescent (10-1) de la portion médiane (5) présente une épaisseur longitudinale (e) selon une direction parallèle à l'axe longitudinal (X) qui est décroissante radialement de l'extérieur vers l'intérieur, de préférence d'une valeur maximale (eₘₐₓ) à une valeur minimale (eₘᵢₙ) au moins deux fois inférieure.

3. Secteur de virole intérieure (1) selon l'une des revendications 1 et 2, dans lequel la portion médiane (5) comporte une paroi extérieure transversale (Pext1) par rapport à l'axe longitudinal (X).

4. Secteur de virole intérieure (1) selon l'une des revendications 1 à 3, dans lequel la portion médiane (5) comporte au moins une première tranche angulaire (T1) et une deuxième tranche angulaire (T2) juxtaposées, le volume de matériau intumescent (10-1) s'étendant uniquement dans la première tranche angulaire (T1).

5. Secteur de virole intérieure (1) selon la revendication 4, dans lequel la portion médiane (5) comporte une surface intérieure (Sint) formant au niveau de la première tranche angulaire (T1) une protubérance longitudinale (11-1) par rapport à la deuxième tranche angulaire (T2).

6. Secteur de virole intérieure (1) selon l'une des revendications 1 à 5, dans lequel le volume de matériau intumescent (10-1) s'étend radialement dans toute la portion médiane (5).

7. Secteur de virole intérieure (1) selon l'une des revendications 1 à 6, dans lequel la portion médiane (5) comprend au moins un film de séparation (12) séparant le volume de matériau intumescent (10-1) de la couche intérieure de matériau composite (9a) et de la couche extérieure de matériau composite (9b).

8. Secteur de virole intérieure (1) selon l'une des revendications 1 à 7, dans lequel la portion médiane (5) s'étend radialement sur une distance (H) au moins deux fois supérieure à une épaisseur radiale (e3) de la portion longitudinale amont (3), de préférence au moins quatre fois supérieure.

9. Secteur de virole intérieure (1) selon l'une des revendications 1 à 8, dans lequel la couche intérieure de matériau composite (9a) et la couche extérieure de matériau composite (9b) comportent, au niveau de la portion médiane (5), une porosité inférieure à 2%, de préférence inférieure à 1% et préférentiellement inférieure à 0,7%.

10. Secteur de virole intérieure (1) selon l'une des revendications 1 à 9, dans lequel le volume de matériau intumescent (10-1) de la portion médiane (5) est désigné premier volume de matériau intumescent (10-1), la portion longitudinale aval (4) comprenant au moins un deuxième volume de matériau intumescent (10-2) pris en sandwich entre la couche intérieure de matériau composite (9a) et la couche extérieure de matériau composite (9b) de manière à former une surépaisseur locale selon la direction radiale, le deuxième volume de matériau intumescent (10-2) s'étendant dans le prolongement longitudinal du premier volume de matériau intumescent (10-1).

11. Secteur de virole intérieure (1) obtenu par chauffage et compression du secteur de virole intérieure (1) selon l'une des revendications 1 à 10, dans lequel les couches de matériau composite (9a, 9b) et le volume de matériau intumescent (10-1) sont durcis, le volume de matériau intumescent (10-1) étant dans un état expansé.

## Patentansprüche

1. Innenmantelsektor (1), der zum Einbau in eine Flugzeugturbomaschine (50) konfiguriert ist, wobei der Innenmantel ein Rotationskörper ist, der in Bezug auf eine von stromaufwärts nach stromabwärts ausgerichtete Längsachse (X) definiert ist und dazu konfiguriert ist, im Inneren einen Sekundärkanal (41) der Flugzeugturbomaschine (50) zu begrenzen, wobei der Innenmantelsektor (1) ein stromabwärts gelegenes Ende (2) umfasst, das umfasst:
• einen stromaufwärts gelegenen Längsabschnitt (3), der sich in einem ersten radialen Abstand (R3) von der Längsachse (X) befindet und dazu konfiguriert ist, sich in der stromaufwärts gelegenen Verlängerung eines inneren Gondelgehäuses (31) zu erstrecken,
• einen stromabwärts gelegenen Längsabschnitt (4), der sich in einem zweiten radialen Abstand (R4) von der Längsachse (X) befindet, der kleiner als der erste radiale Abstand (R3) ist, und dazu konfiguriert ist, sich innerhalb des inneren Gondelgehäuses (31) zu erstrecken, und
• einen mittleren Abschnitt (5), der den stromaufwärts gelegenen Längsabschnitt (3) und den stromabwärts gelegenen Längsabschnitt (4) verbindet,
• wobei der Innenmantelsektor (1) **dadurch gekennzeichnet ist, dass** er mindestens eine innere Verbundmaterialschicht (9a) und mindestens eine äußere Verbundmaterialschicht (9b) umfasst, wobei das Verbundmaterial in Form einer Vielzahl von Verstärkungsfasern in einer Matrix vorliegt, wobei der mittlere Abschnitt (5) des stromabwärts gelegenen Endes (2) mindestens ein intumeszierendes Materialvolumen (10-1) umfasst, das zwischen der inneren Verbundmaterialschicht (9a) und der äußeren Verbundmaterialschicht (9b) derart sandwichartig umschlossen ist, dass gemäß der Längsrichtung eine lokale Verdickung gebildet wird, wobei die Verbundmaterialschichten (9a, 9b) und das intumeszierende Materialvolumen (10-1) formbar und geeignet sind, während eines Erhitzungs- und Kompressionsschritts auszuhärten, wobei das intumeszierende Materialvolumen (10-1) geeignet ist, sich während des Erhitzungs- und Kompressionsschritts auszudehnen.

2. Innenmantelsektor (1) nach Anspruch 1, wobei das intumeszierende Materialvolumen (10-1) des mittleren Abschnitts (5) eine Längsdicke (e) gemäß einer zu der Längsachse (X) parallelen Richtung aufweist, die von außen nach innen radial abnimmt, vorzugsweise von einem Maximalwert (eₘₐₓ) auf einen Minimalwert (eₘᵢₙ), der mindestens zweimal kleiner ist.

3. Innenmantelsektor (1) nach einem der Ansprüche 1 und 2, wobei der mittlere Abschnitt (5) eine zu der Längsachse (X) quer verlaufende Außenwand (Pext1) aufweist.

4. Innenmantelsektor (1) nach einem der Ansprüche 1 bis 3, wobei der mittlere Abschnitt (5) mindestens einen ersten Winkelbereich (T1) und einen zweiten Winkelbereich (T2) aufweist, die nebeneinander angeordnet sind, wobei sich das intumeszierende Materialvolumen (10-1) ausschließlich in dem ersten Winkelbereich (T1) erstreckt.

5. Innenmantelsektor (1) nach Anspruch 4, wobei der mittlere Abschnitt (5) eine Innenfläche (Sint) aufweist, die im Bereich des ersten Winkelbereichs (T1) einen Längsvorsprung (11-1) in Bezug auf den zweiten Winkelbereich (T2) bildet.

6. Innenmantelsektor (1) nach einem der Ansprüche 1 bis 5, wobei sich das intumeszierende Materialvolumen (10-1) radial in dem gesamten mittleren Abschnitt (5) erstreckt.

7. Innenmantelsektor (1) nach einem der Ansprüche 1 bis 6, wobei der mittlere Abschnitt (5) mindestens eine Trennfolie (12) umfasst, die das intumeszierende Materialvolumen (10-1) von der inneren Verbundmaterialschicht (9a) und der äußeren Verbundmaterialschicht (9b) trennt.

8. Innenmantelsektor (1) nach einem der Ansprüche 1 bis 7, wobei sich der mittlere Abschnitt (5) radial über eine Strecke (H) erstreckt, die mindestens doppelt so groß wie eine radiale Dicke (e3) des stromaufwärts gelegenen Längsabschnitts (3), vorzugsweise mindestens viermal so groß, ist.

9. Innenmantelsektor (1) nach einem der Ansprüche 1 bis 8, wobei die innere Verbundmaterialschicht (9a) und die äußere Verbundmaterialschicht (9b) im Bereich des mittleren Abschnitts (5) eine Porosität von weniger als 2 %, vorzugsweise weniger als 1 % und am bevorzugtesten weniger als 0,7 % aufweisen.

10. Innenmantelsektor (1) nach einem der Ansprüche 1 bis 9, wobei das intumeszierende Materialvolumen (10-1) des mittleren Abschnitts (5) als erstes intumeszierendes Materialvolumen (10-1) bezeichnet wird, wobei der stromabwärts gelegene Längsabschnitt (4) mindestens ein zweites intumeszierendes Materialvolumen (10-2) umfasst, das zwischen der inneren Verbundmaterialschicht (9a) und der äußeren Verbundmaterialschicht (9b) derart sandwichartig umschlossen ist, dass gemäß der Längsrichtung eine lokale Verdickung gebildet wird, wobei sich das zweite intumeszierende Materialvolumen (10-2) in der Längsverlängerung des ersten intumeszierenden Materialvolumens (10-1) erstreckt.

11. Innenmantelsektor (1), der durch Erhitzen und Komprimieren des Innenmantelsektors (1) nach einem der Ansprüche 1 bis 10 erhalten wird, wobei die Verbundmaterialschichten (9a, 9b) und das intumeszierende Materialvolumen (10-1) ausgehärtet sind, wobei sich das intumeszierende Materialvolumen (10-1) in einem expandierten Zustand befindet.

## Claims

1. An inner shroud sector (1) configured to be mounted in an aircraft turbomachine (50), the inner shroud being a revolving part defined with respect to a longitudinal axis (X) oriented from upstream to downstream configured to internally delimit a secondary flow path (41) of the aircraft turbomachine (50), the inner shroud sector (1) comprising a downstream end (2) comprising:
- an upstream longitudinal portion (3) located at a first radial distance (R3) from the longitudinal axis (X) and configured to extend in the upstream extension of an inner fan duct (31),
- a downstream longitudinal portion (4) located at a second radial distance (R4) from the longitudinal axis (X) less than the first radial distance (R3) and configured to extend inwardly of the inner fan duct (31), and
- a middle portion (5) connecting the upstream longitudinal portion (3) and the downstream longitudinal portion (4),
- the inner shroud sector (1) being **characterized in that** it comprises at least one inner layer of composite material (9a) and at least one outer layer of composite material (9b), the composite material being in the form of a plurality of reinforcing fibers in a matrix, the middle portion (5) of the downstream end (2) comprising at least one volume of intumescent material (10-1) sandwiched between the inner layer of composite material (9a) and the outer layer of composite material (9b) so as to form a local extra thickness in the longitudinal direction, the layers of composite material (9a, 9b) and the volume of intumescent material (10-1) being malleable and adapted to harden during a heating and compression step, the volume of intumescent material (10-1) being adapted to expand during the heating and compression step.

2. The inner shroud sector (1) according to claim 1, wherein the volume of intumescent material (10-1) of the middle portion (5) has a longitudinal thickness (e) in a direction parallel to the longitudinal axis (X) which decreases radially from the outside inwards, preferably from a maximum value (eₘₐₓ) to a minimum value (eₘᵢₙ) at least twice as small.

3. The inner shroud sector (1) according to one of claims 1 and 2, wherein the middle portion (5) comprises an outer wall (Pext1) transverse to the longitudinal axis (X).

4. The inner shroud sector (1) according to one of claims 1 to 3, wherein the middle portion (5) comprises at least a first angular slice (T1) and a second angular slice (T2) juxtaposed, the volume of intumescent material (10-1) extending only in the first angular slice (T1).

5. The inner shroud sector (1) according to claim 4, wherein the middle portion (5) comprises an inner surface (Sint) forming, at the level of the first angular slice (T1), a longitudinal protuberance (11-1) with respect to the second angular slice (T2).

6. The inner shroud sector (1) according to one of claims 1 to 5, wherein the volume of intumescent material (10-1) extends radially throughout the middle portion (5).

7. The inner shroud sector (1) according to one of claims 1 to 6, wherein the middle portion (5) comprises at least one separating film (12) separating the volume of intumescent material (10-1) from the inner layer of composite material (9a) and the outer layer of composite material (9b).

8. The inner shroud sector (1) according to one of claims 1 to 7, wherein the middle portion (5) extends radially over a distance (H) at least twice as great as a radial thickness (e3) of the upstream longitudinal portion (3), preferably at least four times as great.

9. The inner shroud sector (1) according to one of claims 1 to 8, wherein the inner layer of composite material (9a) and the outer layer of composite material (9b) comprise, at the level of the middle portion (5), a porosity of less than 2%, preferably less than 1% and preferably less than 0.7%.

10. The inner shroud sector (1) according to one of claims 1 to 9, wherein the volume of intumescent material (10-1) of the middle portion (5) is designated a first volume of intumescent material (10-1), the downstream longitudinal portion (4) comprising at least one second volume of intumescent material (10-2) sandwiched between the inner layer of composite material (9a) and the outer layer of composite material (9b) so as to form a local extra thickness in the radial direction, the second volume of intumescent material (10-2) extending in the longitudinal extension of the first volume of intumescent material (10-1).

11. An inner shroud sector (1) obtained by heating and compressing the inner shroud sector (1) according to one of claims 1 to 10, wherein the composite material layers (9a, 9b) and the volume of intumescent material (10-1) are cured, the volume of intumescent material (10-1) being in an expanded state.
